# EUROPEAN PATENT SPECIFICATION

(11) **EP 2 721 292 B1**
(45) Date of publication and mention of the grant of the patent: **19.07.2017**
(21) Application number: 12748182.8
(22) Date of filing: 06.08.2012
(51) Int. Cl.: F03D 7/02, F03D 7/04

(54) **A METHOD OF OPERATING A WIND TURBINE INVOLVING BAT PROTECTION**
VERFAHREN ZUM BETREIBEN EINER WINDTURBINE MIT SCHUTZ VON DEREN SCHAUFELN
PROCÉDÉ DE FONCTIONNEMENT D'UNE ÉOLIENNE IMPLIQUANT UNE PROTECTION CONTRE LES CHAUVES-SOURIS

(30) Priority: 31.08.2011 US 201113222196
(43) Date of publication of application: 23.04.2014
(73) Proprietor: Siemens Aktiengesellschaft, 80333 München (DE)
(72) Inventor: NIELSEN, Kaj Skov, Issaquah, WA 98027 (US); STOKHOLM, Tony, DK-8700 HORSENS (DK)
(86) International application number: PCT/EP2012/065309
(87) International publication number: WO 2013/029922

(56) References cited:
- WO-A1-2010/076500
- DE-A1-102005 046 860

## Description

### FIELD OF INVENTION

The claimed invention describes a method of operating a wind turbine in order to avoid injuries of bats in the vicinity of the wind turbine.

### BACKGROUND OF INVENTION

Observations in the vicinity of wind turbines show that bats may be killed or injured by wind turbines in operation. According to investigations there are two ways to injure or cause the death of a bat by a wind turbine. The first one is that there is a direct collision of the bat with a blade of the wind turbine, when the rotor of the wind turbine is in operation. The second one is that moving wind turbine blades causes high pressure differences in the surrounding area of the turning blades. These air pressure differences might cause internal injuries to the bat, e.g. the lungs of the bat may be hurt if the bat passes by. Thus the direct impact of the turning blade and/or the caused pressure differences of the turning blade may be fatal for the bat.

There are bat species which are endangered in a lot of countries. They are recorded and monitored by help of a so called 'red list'. The protection of these bats is very important especially due to their low reproduction rate. In some countries, for example the U.S.A., the protection of bats may also be a legal requirement. A prior art document dealing with this subject is for example DE 10 2005 046 860 A1.

### SUMMARY OF INVENTION

A method for providing a control strategy for a wind turbine is disclosed, wherein injuries of bats are avoided and the associated energy loss from the wind turbine is minimized at the same time.

Most bats are nocturnal and are active at twilight. Bats use echolocation to detect, localize and even classify their prey in complete darkness. Bat echolocation is a perceptual system where ultrasonic sounds are emitted specifically to produce echoes.

Bats use unique ultrasonic calls where click patterns can be used to identify individual species. The click patterns differ from one bat species to another. The sound even varies when the bat is foraging, migrating or resting, i.e. different sounds are used for different behavioral patterns.

According to the method, calls or sounds of bats are detected and recorded. By post processing, the click patterns are identified, a list of local bats is identified and appropriate parameter settings for the operation of the wind turbine is selected. Thus, the operation of the wind turbine is only modified when a bat is present in the area of the wind turbine.

The control strategy is prepared according to the following steps:
- detecting and recording sounds of bats,
- identifying species of the bats, and creating a list of identified bat species,
- selecting parameter settings in accordance with the identified bat species, and
- operating the wind turbine according to the selected parameter settings.

The sound of the bats may be detected and recorded by a detection system which is located at the wind turbine, for example at the hub, the nacelle, the tower or asides a blade of the wind turbine. In another embodiment, the detection system may be installed in the vicinity of the wind turbine, for example at a meteorological station or a separate construction.

In an embodiment, the detection system comprises a microphone which detects the ultrasonic sounds. The detection system may comprise any other device which is capable of detecting ultrasonic sounds for detecting the sounds of the bats.

Current devices for detecting sounds of bats, for example a microphone, can detect the sound of bats only within a very limited range, which means that the limited range is close to the wind turbine and the blades. It is not sufficient to operate the wind turbine only based upon detection of sounds of the bats, because by the time a bat is detected, the bat would already be injured or hurt. It is therefore necessary to prepare a control strategy for a wind turbine as described above as soon as the wind turbine is installed and before the wind turbine starts operating. When the control strategy is prepared, the control strategy will be stored in a control system associated with the wind turbine and the wind turbine will operate according to the stored control strategy.

The detected sound is recorded and analyzed in order to identify bat species and/or to identify a specific behavioral pattern of the bats in the area of the wind turbine.

Different bat species emit different sounds depending on their behavioral pattern. Thus the relevant bat species and the relevant sound emitted by the bats are preferably saved and stored within a data base or library.

The identification of the species or the behavioral pattern may be done by a bat specialist. The bat specialist observes the behavior of the bats and evaluates the risk for the species. The specialist sets up a sound library for example, which combines the sound of a bat species with conditions under which these species can be expected to be present in the vicinity of the wind turbine.

The sound library may be stored in the control system of the wind turbine. Alternatively, the sound library may be stored in a central control system or central storage device in a remote location from the wind turbine, for example the SCADA system associated with the wind turbine. SCADA system means signal conditioning and data acquisition system and generally refers to industrial control systems which monitor and control industrial, infrastructure, or facility-based processes.

The sound of the bat may be analyzed in an automated way to identify the bat species. The risk of injuries of the bats may be evaluated according to the library. Thus the presence of a specialist is not needed during the operation of the wind turbine.

The sound library may include suitable control commands for the wind turbine. Thus, according to the sound library the wind turbine may be controlled automatically with reference to the detected bat species.

Such a sound library may be used for generating control strategies for other wind turbines by comparing detected sounds with the sounds stored in the library in order to identify the bat species and/or the specific behavioral pattern of the bat.

The result of the identification of the species and/or the behavioral pattern may be stored in a file for later examination. Therefore, a quantity of bats of a specific species and/or their behavior in a specific location can be studied. Thus the knowledge about bats and the evaluation of the risk for the bat can be improved.

After identifying the bat species and/or the specific behavioral pattern of the bat, the parameter settings for the operation of the wind turbine is set according to the presence of the specific species of the bat and/or the specific behavioral pattern of the bat.

With the claimed invention, bats are protected while the effect on the wind turbine and the energy production loss is minimized, since the wind turbine may even produce energy while in bat-mode operation. This means that operation of the wind turbine is not just stopped when bat species are detected, but rather the operation mode of the wind turbine is changed from normal-mode operation into bat-mode operation. Bat-mode operation means that the wind turbine operates according to the developed control strategies considering the identified bat species in the area of the wind turbine. For example, in bat-mode operation, the wind turbine may be stopped at night from time x to time y and is in idle during certain months of the year.

The parameter settings for controlling the wind turbine in bat-mode operation may include for example:
- altering the rotor speed (rpm), in particular reducing the rotor rpm,
- stopping the rotor,
- changing a pitch angle of one or more rotor blades.

The blades of the wind turbine rotate in normal operation at for example 10 to 15 rpm. When reducing the rotor rpm, the blades may rotate at for example 0 to 9 rpm only. Thus, a drop of the air pressure, which is dangerous for bats, is avoided in the area of the rotor blades and it is not dangerous for a bat passing a rotor blade.

The turbine may be set to stop or idle until the bat-mode is no longer active. When the wind turbine rotor is stopped there is no danger for the bats. There is no pressure drop in the vicinity of the rotor and there is no danger of a rotor blade hitting a bat. When the rotor of a wind turbine idles the velocity of the wind turbine rotor is very low. There is nearly no pressure drop in the vicinity of a rotor blade of an idling rotor.

When the turbine is in idle, the turbine can be started again more easily when the bats have left the area of the wind turbine. Thus the energy production can start again easier. Thus the loss of energy production is reduced, while the bats are saved.

The control-parameter may be set in a way that the pitch angle of the rotor blades is changed. When the pitch angle of the rotor blade is changed the blade comes closer to a stand still, in particular when the blade is in a neutral position. The pressure drop present in the vicinity of the rotor blade is reduced and rotor speed will be reduced consequently.

The turbine may not have to be stopped completely. It may return to normal operation quite quickly after the bats have left the area of the wind turbine.

Wind turbines are usually used in wind farms with a plurality of wind turbines. A detection of bats at one turbine may impact the operation of one or more groups of turbines or the entire wind farm. In an embodiment, the sound of the bat may be detected at a first wind turbine, while the operation of all the wind turbines of the wind farm is controlled according to detected sounds and selected parameter settings consistent with the identified bat species of the detected sounds. The control strategy may be implemented at the turbines directly or the wind turbines are controlled by a central control system which is in a remote location from the wind turbines.

Behavioral patterns and parameters of different bat species which have to be considered when developing the control strategy are described in the following.

The control strategy and therefore the operation of the wind turbine depend on the identified local bat species and their specific behavioral pattern.

The different behavioral pattern refers to the fact that the bat is foraging, migrating, or looking for a resting spot, for example. Additionally, the behavioral pattern of the bat depends on the season, wind speeds, ambient temperatures and precipitation rates etc.

The operation of the wind turbine needs to be controlled in bat-mode when the bat is present or there is a high likelihood that a bat will be present near the wind turbine.

The activity of a bat is limited to a certain time of the day. The parameter settings of the control strategy may be active when the time of day is between dusk and dawn since bats are active between dusk and dawn. For example, in bat-mode operation, the wind turbine may be stopped from [dusk -x] to [dawn +y] where x and y represents respectively the time before dusk and after dawn that bats are expected to be present.

The parameter settings of bat-mode may be set according to weather conditions. The activity of the bat species may depend on the wind speed, the direction of the wind, the air pressure and the presence of rain. Bats fly in calm conditions up to a certain wind speed. For example, above a certain wind speed, bats of a certain species do not fly. Other bat species might not fly in certain weather conditions like rainy weather. Thus, in these certain weather conditions when the bats do not fly, the control of the operation of the wind turbine does not have to be modified. The influence on the control of the operation of the wind turbine may be limited to weather conditions when the bat species is active and there is a risk of injuring bats.

Certain bat species may not be active or fly when it is raining. Therefore, in another embodiment, the wind turbine or a meteorological station comprises a rain sensor which detects rain. The signal of the sensor is then transmitted to the control system of the wind turbine or the SCADA system.

The control system or SCADA system is configured to switch from bat-mode operation to normal-mode operation when signals from the rain sensor are received. When the control system does not receive a signal from the rain sensor within a predetermined time period, the normal-mode operation will switch back to bat-mode operation unless the control strategy allows staying in normal-operation mode.

The parameter may be set according to an illumination which is present at the wind turbine site, for example full moon illumination. Certain bat species may behave differently during full moon nights. This means that the bate-mode may be set according to the moon phase, for example the rotor of the wind turbine may be in idle or event stopped during a full moon night.

There exist different bat species in different parts of the world. The existence and behavior of certain species of bats vary dependent on the geographical position of the wind turbine. As already mentioned, the local species of bats in the area of the wind turbine will be identified by detecting and recording the click pattern of the bats.

The parameter settings may be selecting according to a specific time of year. Bats are in most regions only active during part of the year, so bat mode may be entered for region A from date x to date y of the year. In tropical regions this may include the entire year and on the southern hemisphere this may stretch across new years for example. In most parts of Europe the activity of the bats starts in spring and end in autumn, for example. The seasons are different or begin at a different time due to the influence of a coast or in the middle of a continent. Thus, the activity of the bats might start earlier in the year or last longer in a certain geographical region.

The sounds of the bat species in the area of the wind turbine and the specific conditions on which the parameter settings are based may be monitored, for example using the detection system, over time in order to decide if the wind turbine may return to normal-mode operation. It may be that the identified bat species in the area of the wind turbine have left the area over the years, for example because the climate has changed, which means that the wind turbine can be operated in normal operation without bat-mode operation.

In a further embodiment the operation of the wind turbine is only modified when an endangered bat species is detected or when a bat species with a high harm exposure is detected.

### BRIEF DESCRIPTION OF THE DRAWINGS

FIG 1 shows an embodiment for preparing a control strategy,
FIG 2 shows an embodiment of different control strategies for different species, and
FIG 3 shows an embodiment of a control strategy.

### DETAILED DESCRIPTION OF INVENTION

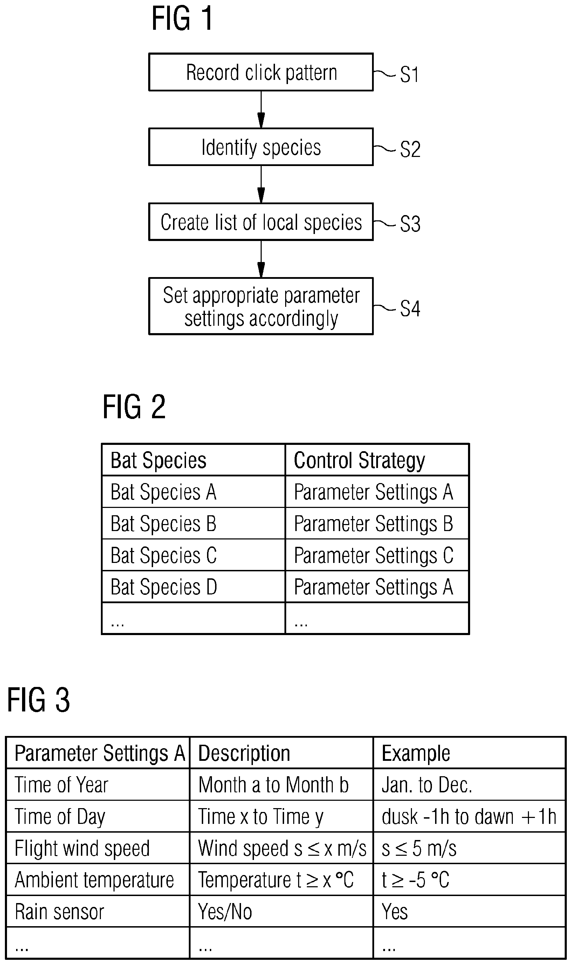

FIG 1 shows the method by help of a block diagram. According to the block diagram a list of parameter settings to control the wind turbine is created.

The first step S1 is to record the click pattern, which is part of the sound of the bat. The result of S1 is the input for the second block S2. In the second step S2, the species of the bat is identified. Based upon S2, a list of local species of bats is created (step S3). The last step S4 includes setting appropriate parameter settings according to the created list of identified species.

FIG 2 shows an embodiment of different control strategies for different species. FIG 2 shows a table listing species and control strategies. For example, bat species A requires a control strategy which includes the parameter settings A. For the identified bat species B, parameter settings B are chosen. FIG 2 also shows that different bat species may require the same strategies because the different species show a very similar or identical behavior pattern. For example, bat species D requires the parameter settings D which are the same settings as for bat species A.

FIG 3 shows an embodiment of a control strategy, for example for the control strategy according to parameter settings A (FIG 2). The table according to FIG 3 lists the control strategy and the detailed parameter settings for this strategy. The list of parameter settings includes for example time of year, time of day, flight wind speed, and minimum flight temperature and if a rain sensor is required. The list of parameters is only exemplary and may comprise more parameters.

The parameter settings A include that the wind turbine is in bat-mode operation from January to December from dusk -1h to dawn +1h each day. Also, the wind turbine operates in bat-mode operation when the wind speed is less than 5 m/s and when the ambient temperature is above -5° C, because the identified bat species does not fly when the wind speed is 5 m/s or more and when the ambient temperature is below -5° C. Furthermore, a rain sensor is required because the bat species A and D (see FIG 2) do not fly when it is raining. All the mentioned criteria time of year, time of day, flight wind speed, minimum flight temperature etc. have to be met for the bat-mode operation to be activated.

## Claims

1. A method of operating a wind turbine, comprising:
detecting a sound of a bat in an area of the wind turbine;
identifying a bat species based upon a detected sound; and
setting a parameter for operating the wind turbine according to the identified local bat species and their specific behavioral pattern.

2. The method according to claim 1, further comprising:
recording and storing the detected sound in a data base or a sound library, wherein the detected sound is stored in connection with the identified bat species.

3. The method according to claim 2, further comprising:
comparing the detected sound with sounds stored in the sound library or data base prior in order to identify the bat species.

4. The method according to claim 2, wherein the data base or sound library are stored in a control system of the wind turbine.

5. The method according to claim 2, wherein the data base or the sound library are stored in a central control system or a central storage device in a remote location from the wind turbine.

6. The method according to claim 1, wherein the parameter for operating the wind turbine includes
altering the rotor speed (rpm), in particular reducing the rotor rpm, and/or
stopping the rotor, and/or
changing a pitch angle of one or more rotor blades.

7. The method according to claim 1, wherein the parameter is set according to the time of day.

8. The method according to claim 7, wherein the parameter is set from [dusk-x] to [dawn +y] where x and y represent the time before dusk and after dawn when a bat is expected to be present.

9. The method according to claim 1, wherein the parameters is set according to weather conditions.

10. The method according to claim 1, wherein the parameter is set according to a geographical position of the wind turbine.

11. The method according to claim 1, wherein the parameter is set according to a specific time of the year.

12. The method according to claim 1, wherein a control strategy for the wind turbine includes parameter settings according to identified bat species, and wherein the control strategy is stored in a control system associated with the wind turbine.

13. The method according to claim 1, wherein the sound of the bat is detected by a detection system which is located at the wind turbine.

14. The method according to claim 1, wherein the sound of the bat is detected by a detection system near the wind turbine.

15. The method according to claim 1, wherein the sound of identified bat species in an area of the wind turbine and associated specific conditions on which parameter settings are based are monitored over time in order to decide if the turbine may return to a normal-mode operation.

16. The method according to claim 1, wherein parameter settings associated with one wind turbine are used for controlling other wind turbines.

17. The method according to claim 1, wherein a rain sensor for detecting rain is located at or near the wind turbine, wherein an operation of the wind turbine is modified according to signals of the rain sensor within predetermined time periods.

18. The method according to claim 1, wherein the wind turbine comprises a plurality of sensors for detecting and/or measuring ambient conditions.

## Patentansprüche

1. Verfahren zum Betreiben einer Windenergieanlage mit Folgendem:
Erkennen eines Geräuschs einer Fledermaus in einem Bereich der Windenergieanlage,
Bestimmen einer Fledermausart auf der Grundlage eines erkannten Geräuschs und
Einstellen eines Parameters zum Betreiben der Windenergieanlage entsprechend der bestimmten vor Ort vorkommenden Fledermausart und ihres spezifischen Verhaltensmusters.

2. Verfahren nach Anspruch 1, das ferner Folgendes umfasst:
Aufzeichnen und Speichern des erkannten Geräuschs in einer Datenbank oder einer Geräuschebibliothek, wobei das erkannte Geräusch in Verbindung mit der bestimmten Fledermausart gespeichert wird.

3. Verfahren nach Anspruch 2, das ferner Folgendes umfasst:
Vergleichen des erkannten Geräuschs mit zuvor in der Geräuschebibliothek oder der Datenbank gespeicherten Geräuschen zwecks Bestimmen der Fledermausart.

4. Verfahren nach Anspruch 2, wobei die Datenbank oder die Geräuschebibliothek in einem Steuersystem der Windenergieanlage gespeichert werden.

5. Verfahren nach Anspruch 2, wobei die Datenbank oder die Geräuschebibliothek in einem zentralen Steuersystem oder einer zentralen Speichereinrichtung an einem von der Windenergieanlage entfernt gelegenen Standort gespeichert werden.

6. Verfahren nach Anspruch 1, wobei der Parameter zum Betreiben der Windenergieanlage Folgendes aufweist:
Verändern der Rotordrehzahl (U/min), insbesondere Reduzieren der U/min des Rotors, und/oder
Anhalten des Rotors und/oder
Ändern eines Einstellwinkels eines oder mehrerer Rotorblätter.

7. Verfahren nach Anspruch 1, wobei der Parameter der Tageszeit entsprechend eingestellt wird.

8. Verfahren nach Anspruch 7, wobei der Parameter von [Abenddämmerung -x] bis [Morgendämmerung +y] eingestellt wird, wobei x und y für die Zeit vor der Abenddämmerung und nach der Morgendämmerung stehen, wenn davon ausgegangen wird, dass eine Fledermaus anwesend ist.

9. Verfahren nach Anspruch 1, wobei der Parameter den Wetterbedingungen entsprechend eingestellt wird.

10. Verfahren nach Anspruch 1, wobei der Parameter einer geografischen Position der Windenergieanlage entsprechend eingestellt wird.

11. Verfahren nach Anspruch 1, wobei der Parameter einer spezifischen Zeit im Jahr entsprechend eingestellt wird.

12. Verfahren nach Anspruch 1, wobei eine Steuerstrategie für die Windenergieanlage Parametereinstellungen entsprechend bestimmter Fledermausarten umfasst und die Steuerstrategie in einem mit der Windenergieanlage verknüpften Steuersystem gespeichert ist.

13. Verfahren nach Anspruch 1, wobei das Geräusch der Fledermaus von einem Erkennungssystem erkannt wird, das sich an der Windenergieanlage befindet.

14. Verfahren nach Anspruch 1, wobei das Geräusch der Fledermaus von einem Erkennungssystem in der Nähe der Windenergieanlage erkannt wird.

15. Verfahren nach Anspruch 1, wobei das Geräusch bestimmter Fledermausarten in einem Bereich der Windenergieanlage und zugehörige spezifische Bedingungen, auf denen die Parametereinstellungen beruhen, über einen Zeitraum überwacht werden, damit entschieden werden kann, ob die Turbine in einen normalen Betriebsmodus zurückkehren kann.

16. Verfahren nach Anspruch 1, wobei mit einer Windenergieanlage verknüpfte Parametereinstellungen zum Steuern anderer Windenergieanlagen verwendet werden.

17. Verfahren nach Anspruch 1, wobei sich ein Regensensor zum Erkennen von Regen an oder in der Nähe der Windenergieanlage befindet, wobei ein Betrieb der Windenergieanlage Signalen des Regensensors innerhalb vorgegebener Zeiträume entsprechend modifiziert wird.

18. Verfahren nach Anspruch 1, wobei die Windenergieanlage mehrere Sensoren zum Erkennen und/oder Messen von Umgebungsbedingungen umfasst.

## Revendications

1. Procédé de fonctionnement d'une éolienne, comprenant :
la détection d'un son d'une chauve-souris dans une zone de l'éolienne ;
l'identification d'une espèce de chauve-souris sur la base d'un son détecté ; et
le réglage d'un paramètre pour faire fonctionner l'éolienne en fonction de l'espèce de chauve-souris locale identifiée et de son motif comportemental spécifique.

2. Procédé selon la revendication 1, comprenant en outre :
l'enregistrement et le stockage du son détecté dans une base de données ou une sonothèque, dans lequel le son détecté est stocké en connexion avec l'espèce de chauve-souris identifiée.

3. Procédé selon la revendication 2, comprenant en outre :
la comparaison du son détecté avec des sons stockés dans la sonothèque ou la base de données au préalable afin d'identifier l'espèce de chauve-souris.

4. Procédé selon la revendication 2, dans lequel la base de données ou la sonothèque est stockée dans un système de commande de l'éolienne.

5. Procédé selon la revendication 2, dans lequel la base de données ou la sonothèque est stockée dans un système de commande central ou un dispositif de stockage central en un emplacement distant de l'éolienne.

6. Procédé selon la revendication 1, dans lequel le paramètre pour faire fonctionner l'éolienne inclut
la modification de la vitesse de rotor (tr/min), en particulier la réduction des tr/min de rotor, et/ou
l'arrêt du rotor, et/ou
le changement d'un angle de calage d'une ou plusieurs pale (s) de rotor.

7. Procédé selon la revendication 1, dans lequel le paramètre est fixé en fonction de l'heure du jour.

8. Procédé selon la revendication 7, dans lequel le paramètre est fixé de [crépuscule - x] à [aube + y] où x et y représentent la durée avant le crépuscule et après l'aube pendant laquelle la présence d'une chauve-souris est attendue.

9. Procédé selon la revendication 1, dans lequel le paramètre est fixé en fonction des conditions météorologiques.

10. Procédé selon la revendication 1, dans lequel le paramètre est fixé en fonction d'une position géographique de l'éolienne.

11. Procédé selon la revendication 1, dans lequel le paramètre est fixé en fonction d'un moment spécifique de l'année.

12. Procédé selon la revendication 1, dans lequel une stratégie de commande pour l'éolienne inclut des réglages de paramètre en fonction de l'espèce de chauve-souris identifiée, et dans lequel la stratégie de commande est stockée dans un système de commande associé avec l'éolienne.

13. Procédé selon la revendication 1, dans lequel le son de la chauve-souris est détecté par un système de détection qui est situé sur l'éolienne.

14. Procédé selon la revendication 1, dans lequel le son de la chauve-souris est détecté par un système de détection à côté de l'éolienne.

15. Procédé selon la revendication 1, dans lequel le son de l'espèce de chauve-souris identifiée dans une zone de l'éolienne et des conditions spécifiques associées sur lesquelles les réglages de paramètres sont basés sont surveillés dans le temps afin de décider si l'éolienne peut revenir à un fonctionnement en mode normal.

16. Procédé selon la revendication 1, dans lequel les réglages de paramètres associés avec une éolienne sont utilisés pour commander d'autres éoliennes.

17. Procédé selon la revendication 1, dans lequel un capteur de pluie pour détecter de la pluie est situé sur ou à côté de l'éolienne, dans lequel un fonctionnement de l'éolienne est modifié en fonction de signaux du capteur de pluie à l'intérieur de périodes de temps prédéterminées.

18. Procédé selon la revendication 1, dans lequel l'éolienne comprend une pluralité de capteurs pour détecter et/ou mesurer des conditions ambiantes.
